# EUROPÄISCHE PATENTANMELDUNG

(11) **EP 3 147 837 A1**
(43) Veröffentlichungstag der Anmeldung: **29.03.2017**
(21) Anmeldenummer: 15187169.6
(22) Anmeldetag: 28.09.2015
(51) Int. Cl.: G06Q 10/08

(54) **OPTIMIEREN EINES LOGISTISCHEN NETZES**

(71) Anmelder: Siemens Aktiengesellschaft, 80333 München (DE)
(72) Erfinder: Drautzburg, Martin, 78467 Konstanz (DE); Empting, Arnd, 78224 Singen (DE); Klevesaat, Gerd, 78467 Konstanz (DE); Raddatz, Torsten, 78467 Konstanz (DE)
(74) Vertreter: Maier, Daniel Oliver

(57) **Zusammenfassung**

System (11) und Verfahren zum Optimieren eines logistischen Netzes (1). Das System umfasst:
- eine Simulationskomponente (12), welche adaptiert ist für einen Hub (10) eine Prognose anhand von Informationen zu erstellen, welche den Betrieb des Hubs (10) tangieren;
- eine Buchungskomponente (14), welche adaptiert ist anhand der Prognose Buchungen von Items auf Transporte (71-82) durchzuführen.

## Beschreibung

Die vorliegende Erfindung bezieht sich auf das technische Gebiet von Verfahren und Systemen zum Optimieren eines logistischen Netzes.

Begriffe: Synonym für den Begriff "Umschlagplatz" wird auch der Begriff "Hub" verwendet. Synonym für den Begriff "Gut" wird auch der Begriff "Item" verwendet.

In logistischen Netzen werden Güter über Transporte zwischen Absende-Orten, Umschlagplätzen und Ziel-Orten befördert. Die Transporte haben eine begrenzte Kapazität, verursachen Kosten und erzeugen Verzögerungen. Für ein gegebenes Gut gibt es in der Regel eine Vielzahl von Transportketten, die die gewünschte Verbindung zwischen Absende-Ort und Ziel-Ort herstellen.

Aus diesen Möglichkeiten müssen diejenigen herausgefiltert werden, die gewisse Optimalitätskriterien erfüllen. Es wäre wünschenswert, dass es dabei weniger darum geht, den Weg eines einzelnen Gutes, sondern das Netz als Ganzes zu optimieren. Das Ergebnis dieses Verfahrens ist
(1) Eine optimierte Belegung der Verfügbaren Transporte
(2) Eine Vorhersage der einströmenden Last auf jeden Umschlagplatz und Ziel-Ort.

Dabei ist es problematisch, dass das Ergebnis dieses Verfahrens nicht für alle Zeiten gültig bleibt. Durch neue Informationen kann ein bereits berechnetes Ergebnis unbrauchbar werden. In der Praxis führt dies zu suboptimalen logistischen Leistungen und zu ungenauen Vorhersagen.

In einigen logistischen Netzen werden Güter, sobald sie bekannt sind, auf Transporte "gebucht". Je nach verwendetem Buchungssystem, kann das Ergebnis den Optimalitätspunkt mehr oder weniger gut treffen.

Die Prozesse in den Umschlagplätzen sind zunächst angehalten die vorab berechneten Buchungen zu erfüllen. Durch Überschätzung der Leistungsfähigkeit eines Hubs oder durch ungeplante Ereignisse kommt es aber vor, dass Güter ihre geplanten ausgehenden Transporte nicht erreichen. Die Ursachen können im Umschlagplatz selbst liegen, oder in Änderungen an den eingehenden oder ausgehenden Transporten. In solchen Fällen kann ein Materialfluss-Manager, also ein Mensch, eine Umbuchung vornehmen.

Eine Umbuchung wird in der Regel die logistische Leistung des Netzes beeinträchtigen. Sie sollte daher mit der gleichen Umsicht, wie die ursprünglichen Buchungen durchgeführt werden. In der Praxis ist das nicht der Fall. Umbuchungen werden ad-hoc durchgeführt, was zwar zu aktualisierten Vorhersagen führt, aber die optimale Belegung der Transporte beeinträchtigt.

Der vorliegenden Erfindung liegt daher die Aufgabe zugrunde, ein logistisches Netz zu optimieren. Diese Aufgabe wird durch die in den unabhängigen Ansprüchen beschriebenen Lösungen gelöst.

Die erfindungsgemäße Lösung sieht zum einen ein Verfahren zum Optimieren eines logistischen Netzes vor. Dabei werden Buchungen von Items auf Transporte welche einen Hub des logistischen Netzes tangieren durchgeführt. Die Buchungen werden anhand einer Prognose durchgeführt. Die Prognose wird anhand von Informationen erstellt, welche den Betrieb des Hubs tangieren.

Die erfindungsgemäße Lösung sieht zudem ein System zum Optimieren eines logistischen Netzes vor. Das System umfasst eine Simulationskomponente und eine Buchungskomponente. Die Simulationskomponente ist adaptiert, für einen Hub des logistischen Netzes eine Prognose anhand von den Betrieb des Hubs tangierenden Informationen zu erstellen. Die Buchungskomponente ist adaptiert, anhand der Prognose Buchungen von Items auf Transporte durchzuführen.

Vorteilhafte Ausgestaltungen der Erfindung sind in weiteren Ansprüchen angegeben.

Gemäss einem Ausführungsbeispiel wird aufgrund von aktualisierten Informationen die Prognose aktualisiert, und für zumindest einen Teil der Buchungen werden aufgrund der aktualisierten Prognose Umbuchungen vorgenommen. Dadurch lässt sich eine hohe Qualität des Betriebs des logistischen Netzes beibehalten.

Gemäss einem Ausführungsbeispiel umfassen die Informationen und/oder die aktualisierten Informationen hub-externe Informationen, beispielsweise von mindestens einem weiteren Hub des logistischen Netzes oder von einem Transport. Dadurch ergibt sich der Vorteil, dass sich die Planung an die Gegebenheiten oder Ereignisse in anderen Hubs oder Transporten anpassen lassen. Gemäss einem Ausführungsbeispiel hat ein Hub lediglich Kenntnis über die einströmenden Transporte (und was sie an Bord haben) und abgehende Transporte (und ihre freien Kapazitäten) benötigt und zusätzlich den "Arbeitsplan" des Hubs, inklusive der Leistungsfähigkeit (Durchsatz, Latenz) der einzelnen Prozesse.

Gemäss einem Ausführungsbeispiel umfassen die Informationen und/oder die aktualisierten Informationen hub-interne Informationen. Dadurch ergibt sich der Vorteil, dass sich die Planung an die Gegebenheiten oder Ereignisse in dem Hub anpassen lässt.

Gemäss einem Ausführungsbeispiel werden die Buchungen und/oder die Umbuchungen vorgenommen, sobald die Informationen zur Verfügung stehen. Dadurch ergibt sich der Vorteil, dass sich eine kontinuierliche Buchung und/oder Umbuchung erreichen lässt.

Gemäss einem Ausführungsbeispiel werden aufgrund der Prognose die Buchungen so vorgenommen, dass ein Betrieb des logistischen Netzes als Ganzes optimiert wird. Dadurch kann vorteilhafterweise eine hohe Betriebsqualität erreicht werden.

Gemäss einem Ausführungsbeispiel werden aufgrund der aktualisierten Prognose die Umbuchungen so vorgenommen, dass ein Betrieb des logistischen Netzes als Ganzes optimiert wird. Dadurch kann vorteilhafterweise selbst dann wenn Umbuchungen notwendig sind eine hohe Betriebsqualität erreicht werden.

Gemäss einem Ausführungsbeispiel werden die Buchungen und/oder die Umbuchungen automatisch oder halbautomatisch vorgenommen. Dadurch sinkt der Arbeitsaufwand, um die Umbuchungen vorzunehmen.

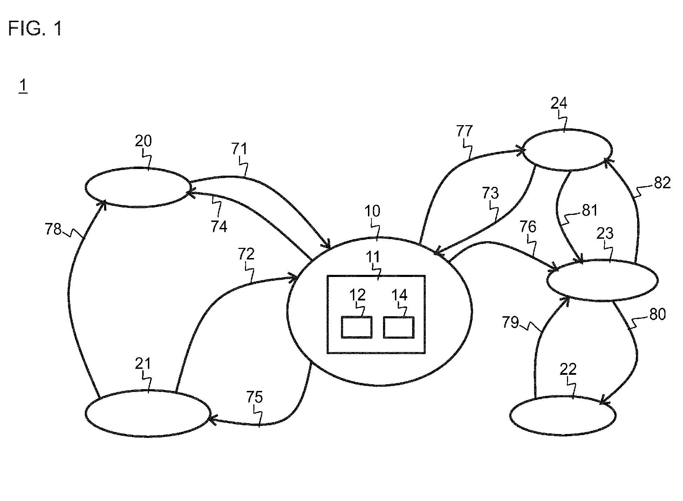

Die Erfindung wird nachfolgend anhand der Zeichnung beispielsweise näher erläutert. Dabei zeigt Figur 1 ein logistisches Netz mit einem System gemäss einem Ausführungsbeispiel der Erfindung.

Figur 1 zeigt ein logistisches Netz 1 und illustriert Verfahren gemäss Ausführungsbeispielen der Erfindung. Gemäss einigen Ausführungsformen der Erfindung werden Umbuchungen früher und besser erfolgen. Das logistische Netz umfasst mehrere Hubs 10, 20, 21, 22, 23, 24. Zwischen den Hubs werden Transporte 71-82 durchgeführt. Wie in Figur 1 dargestellt müssen nicht alle Hubs direkt miteinander verbunden sein, sodass aus Transporten zusammengesetzte Transportketten nötig sind, um beispielsweise ein Item vom Hub 21 zum Hub 22 zu transportieren. Auch wenn alle Hubs mit allen Hubs durch Transporte direkt verbunden wären, kann es manchmal sinnvoll oder notwendig sein, Güter nicht auf einem direkten Transport von einem Hub zum andern zu transportieren. Mit andern Worten: Güter können auf unterschiedlichen Transporten über Transportketten ihre Ziele erreichen.

Zumindest der Hub 10 umfasst ein System 11 zum Optimieren des logistischen Netzes 1. Das System 11 muss nicht zwingend in dem Hub angeordnet sein, sondern könnte auch ausserhalb des Hubs 10 oder verteilt über mehrere Hubs 10, 20, 21, 22, 23, 24, angeordnet sein.

Das System 11 umfasst eine Simulationskomponente 12 und eine Buchungskomponente 14. Die Simulationskomponente 12 ist adaptiert, für den Hub eine Prognose anhand von den Betrieb des Hubs 10 tangierenden Informationen zu erstellen. Die Buchungskomponente 14 ist adaptiert, anhand der Prognose Buchungen von Items auf Transporte 71-82 durchzuführen.

Um das Netz 1 zu optimieren, werden die Buchungen von Items auf die Transporte 71-82 durchgeführt. Die Buchungen werden anhand der Prognose durchgeführt, die anhand der Informationen erstellt wird, welche den Betrieb des Hubs 10 tangieren.

Gemäss dem in Figur 1 dargestellten Ausführungsbeispiel ist die Simulationskomponente 12 adaptiert, aufgrund von aktualisierten Informationen die Prognose zu aktualisieren, und die Buchungskomponente 14 ist adaptiert, für zumindest einen Teil der Buchungen aufgrund der aktualisierten Prognose Umbuchungen vorzunehmen. Dies erlaubt es, das logistische Netz auch dann zu optimieren, wenn aufgrund der aktualisierten Informationen Umbuchungen vorgenommen werden müssen.

Die Informationen und/oder die aktualisierten Informationen können hub-externe Informationen von mindestens einem weiteren Hub 20, 21, 22, 23, 24, des logistischen Netzes 1 umfassen. Hub-externe Informationen sind beispielsweise Buchungen von anderen Hubs, Verspätungen von Transporten, Ausfälle oder Störungen in Hubs.

Insbesondere können Umbuchungen integraler Bestandteil eines halbautomatischen Planungsverfahrens werden. Vorzugsweise werden die Umbuchungen kontinuierlich vorgenommen. Sobald neue Informationen, beispielsweise über Verspätungen, Ausfälle, Änderungen der Kapazitäten oder Beladungen verfügbar werden, werden Buchungen aktualisiert. Vorzugsweise liegt dabei das Netz als Ganzes im Fokus. Dadurch bleibt die Qualität der Buchungen über die Zeit konstant, d.h. zu jedem Zeitpunkt werden Transporte so belegt, wie es unter den gegebenen Umständen optimal ist.

Alternativ oder zusätzlich umfassen die Informationen und/oder die aktualisierten Informationen hub-interne Informationen, beispielsweise ein Ausfall oder eine Störung einer Maschine des Hubs 10. Auf diese Weise lässt sich der Umschlagplatz 10 berücksichtigen. Dadurch sind die Umbuchungen nicht nur durch externe Ereignisse motiviert, sondern können auch durch Vorkommnisse im Hub 10 selbst erforderlich werden. Werden Umbuchungen kontinuierlich vorgenommen, so wird das System 11 daher Prognosen bezüglich der Entwicklung innerhalb des Umschlagplatzes 10 heranziehen um nötige Umbuchungen zu identifizieren. Diese Prognosen wiederum werden aus dem Zustand und der internen Planung des Umschlagsplatzes 10 gewonnen.

Eine kontinuierliche Buchung und/oder Umbuchung wird beispielsweise erreicht, indem die Buchungen und/oder die Umbuchungen vorgenommen werden, sobald die Informationen zur Verfügung stehen.

Gemäss dem in Figur 1 dargestellten Ausführungsbeispiel ist die Buchungskomponente 14 adaptiert, aufgrund der Prognose die Buchungen so vorzunehmen, dass ein Betrieb des logistischen Netzes 1 als Ganzes optimiert wird. Dies hat den Vorteil, einer optimierten Belegung eines Teils oder aller der verfügbaren Transporte Auch kann eine Vorhersage der einströmenden Last auf jeden Umschlagplatz und Ziel-Ort erzeugt werden.

Indem die Buchungskomponente aufgrund der aktualisierten Prognose auch die Umbuchungen so vornimmt, dass ein Betrieb des logistischen Netzes 1 als Ganzes optimiert wird, lässt sich zudem eine verbesserte Betriebsqualität auch im Falle des Eintritts von unvorhergesehenen Ereignissen aufrecht erhalten.

Das in Figur 1 dargestellte System 11 ist zudem adaptiert, die Buchungen und/oder die Umbuchungen automatisch oder halbautomatisch vorzunehmen.

Durch kontinuierliches Umbuchen entsteht eine Planung die zu jedem Zeitpunkt aktuell und optimiert ist. Bei den etablierten Verfahren sinkt die Qualität der Buchungen mit der Zeit, und zwar umso stärker, je mehr unerwartete Ereignisse eingetreten sind.

Dadurch, dass erwartete zukünftige Zustände der Umschlagsplätze selbst für die Aktualisierungen der Buchungen herangezogen werden, reagiert das Buchungssystem auf Planänderungen innerhalb eines Umschlagsplatzes. Bei den ad-hoc Entscheidungen der etablierten Verfahren hängt die Qualität der Buchungen von der Sorgfalt und Weitsicht der Materialflussmanager ab und es entsteht eine Tendenz, lokale Optima zu bevorzugen.

## Patentansprüche

1. Verfahren zum Optimieren eines logistischen Netzes (1), umfassend den Verfahrensschritt:
- Durchführen von Buchungen von Items auf Transporte (71-82) welche einen Hub (10) des logistischen Netzes (1) tangieren;
wobei die Buchungen anhand einer Prognose durchgeführt werden, die anhand von Informationen erstellt wird, welche den Betrieb des Hubs (10) tangieren.

2. Verfahren nach Anspruch 1, wobei aufgrund von aktualisierten Informationen die Prognose aktualisiert wird, und für zumindest einen Teil der Buchungen aufgrund der aktualisierten Prognose Umbuchungen vorgenommen werden.

3. Verfahren nach einem der vorhergehenden Ansprüche, wobei die Informationen und/oder die aktualisierten Informationen hub-externe Informationen umfassen, beispielsweise von mindestens einem weiteren Hub des logistischen Netzes oder von einem Transport.

4. Verfahren nach einem der vorhergehenden Ansprüche, wobei die Informationen und/oder die aktualisierten Informationen hub-interne Informationen umfassen.

5. Verfahren nach einem der vorhergehenden Ansprüche, wobei die Buchungen und/oder die Umbuchungen vorgenommen werden, sobald die Informationen zur Verfügung stehen.

6. Verfahren nach einem der vorhergehenden Ansprüche, wobei aufgrund der Prognose die Buchungen so vorgenommen werden, dass ein Betrieb des logistischen Netzes als Ganzes optimiert wird.

7. Verfahren nach einem der vorhergehenden Ansprüche, wobei aufgrund der aktualisierten Prognose die Umbuchungen so vorgenommen werden, dass ein Betrieb des Hubs und oder ein Betrieb des logistischen Netzes als Ganzes optimiert wird.

8. Verfahren nach einem der vorhergehenden Ansprüche, wobei die Buchungen und/oder die Umbuchungen automatisch oder halbautomatisch vorgenommen werden.

9. System (11) zum Optimieren eines logistischen Netzes (1), umfassend
- eine Simulationskomponente (12), welche adaptiert ist für einen Hub (10) des logistischen Netzes (1) eine Prognose anhand von Informationen zu erstellen, welche den Betrieb des Hubs (10) tangieren;
- eine Buchungskomponente (14), welche adaptiert ist anhand der Prognose Buchungen von Items auf Transporte (71-82) durchzuführen.

10. System (11) nach Anspruch 9, wobei die Simulationskomponente (12) adaptiert ist, aufgrund von aktualisierten Informationen die Prognose zu aktualisieren, und die Buchungskomponente (14) adaptiert ist, für zumindest einen Teil der Buchungen aufgrund der aktualisierten Prognose Umbuchungen vorzunehmen.

11. System (11) nach einem der Ansprüche 9 oder 10, wobei die Informationen und/oder die aktualisierten Informationen hub-externe Informationen umfassen, beispielsweise von mindestens einem weiteren Hub (20-24) des logistischen Netzes (1).

12. System (11) nach einem der Ansprüche 9 bis 11, wobei die Informationen und/oder die aktualisierten Informationen hub-interne Informationen umfassen.

13. System (11) nach einem der Ansprüche 9 bis 12, wobei das System (11) adaptiert ist die Buchungen und/oder die Umbuchungen vorzunehmen, sobald die Informationen zur Verfügung stehen.

14. System (11) nach einem der Ansprüche 9 bis 13, wobei die Buchungskomponente (14) adaptiert ist, aufgrund der Prognose die Buchungen so vorzunehmen, dass ein Betrieb des Hubs (10) und/oder ein Betrieb des logistischen Netzes (1) als Ganzes optimiert wird.

15. System (11) nach einem der Ansprüche 9 bis 14, wobei die Buchungskomponente (14) adaptiert ist, aufgrund der aktualisierten Prognose die Umbuchungen so vorzunehmen, dass ein Betrieb des Hubs (10) und oder ein Betrieb des logistischen Netzes (1) als Ganzes optimiert wird.
